# EUROPEAN PATENT APPLICATION

(11) **EP 2 276 101 A1**
(43) Date of publication of application: **19.01.2011**
(21) Application number: 09738625.4
(22) Date of filing: 27.04.2009
(51) Int. Cl.: H01M 14/00, H01L 31/04

(54) **MANUFACTURING METHOD FOR PHOTOELECTRIC TRANSDUCER, PHOTOELECTRIC TRANSDUCER MANUFACTURED THEREBY, MANUFACTURING METHOD FOR PHOTOELECTRIC TRANSDUCER MODULE, AND PHOTOELECTRIC TRANSDUCER MODULE MANUFACTURED THEREBY**

(30) Priority: 28.04.2008 JP 2008116965; 24.02.2009 JP 2009040391
(71) Applicant: Fujikura, Ltd., Tokyo 135-0042 (JP)
(72) Inventor: USUI, Hiroki, Sakura-shi Chiba 285-8550 (JP)
(74) Representative: HOFFMANN EITLE
(86) International application number: PCT/JP2009/001908
(87) International publication number: WO 2009/133688

(57) **Abstract**

[Problems] Provided are a photoelectric conversion element manufacturing method and the like which is capable of easily manufacturing a photoelectric conversion element including a terminal that is strongly bonded to an electrode made using titanium.

[Means to solve the problems] A method of manufacturing a photoelectric conversion element 100 includes: a semiconductor forming step of forming a porous oxide semiconductor layer 3 on a surface of a catalytic layer 6 of a first electrode 10 including a metal plate 4 made of titanium or an alloy including titanium and the catalytic layer 6, or a surface of a transparent conductor 1 of a second electrode 20 including the transparent conductor 1; a dye supporting step of supporting a photo-sensitized dye on the porous oxide semiconductor layer 3; a sealing step of surrounding and sealing the porous oxide semiconductor layer 3 and an electrolyte 5 between the first electrode 10 and the second electrode 20 with a sealing material 14; and a terminal forming step of forming a terminal 7 on the metal plate 4. In the terminal forming step, the terminal 7 is formed by applying an ultrasonic wave to a high-melting-point solder while the high-melting-point solder is heated to melt.

## Description

### TECHNICAL FIELD

The present invention relates to a method of manufacturing a photoelectric conversion element, a photoelectric conversion element manufactured by the method, a method of manufacturing a photoelectric conversion element module, and a photoelectric conversion element module manufactured by the method.

### BACKGROUND ART

A dye-sensitized solar cell is developed by Gratzel, et al., (Swiss), has advantages of high photoelectric conversion efficiency and low manufacturing cost, and attracts attention as a new type solar cell.

The dye-sensitized solar cell has a structure in which a working electrode on which a porous oxide semiconductor layer having a photo-sensitized dye supported thereon and a counter electrode that is provided so as to face the working electrode are provided on a transparent base having a transparent semiconductor film provided thereon, in which an electrolyte containing redox pairs is filled between the working electrode and the counter electrode and surrounded by a sealing member.

In this type of dye-sensitized solar cell, when the photo-sensitized dye absorbs incident light, such as sun light or the like, electrons are generated and injected into oxide semiconductor fine particles, and electromotive force is generated between the working electrode and the counter electrode. In this way, the dye-sensitized solar cell serves as a photoelectric conversion element that converts light energy into power.

In general, as the electrolyte, an electrolytic solution obtained by dissolving redox pairs, such as I⁻/I³⁻, in an organic solvent, such as acetonitrile, is used. In addition, for example, the following structures have been known: a structure using a non-volatile ionic liquid; a structure that gelates a liquid electrolyte with an appropriate gelling agent to pseudo-solidify the liquid electrolyte; and a structure using a solid-state semiconductor, such as a p-type semiconductor.

The counter electrode needs to be made of a material having resistance to corrosion that is caused by a chemical reaction with the electrolyte. As the material, a titanium substrate on which a platinum film is formed or a glass electrode substrate on which a platinum film is formed may be used.

However, in the glass electrode substrate having a conductive layer made of platinum formed thereon, the thickness of glass needs to be equal to or more than a predetermined value in order to ensure the strength of the glass. As a result, the thickness of the photoelectric conversion element increases. Therefore, there is a demand for a counter electrode including a titanium substrate. However, it is difficult to connect, for example, a lead wire to the titanium substrate since an oxide film is formed on the surface of the titanium substrate.

Therefore, it is proposed that a film made of dissimilar metal (for example, Cu) facilitating soldering is formed on the surface of an electrode including the titanium substrate by a sputtering method or the like (see Patent Document 1).

### Background Art Document

### Patent Document

Patent Document 1: Japanese Patent Application Laid-Open (JP-A) No. 2007-280849

### DISCLOSURE OF INVENTION

### Problems to be solved by the Invention

However, in the photoelectric conversion element disclosed in Patent Document 1, since the film made of the dissimilar metal is formed by the sputtering method or the like, it is necessary to use a vacuum apparatus or the like. Therefore, costs increase, and it is difficult to form the film. Therefore, there is a problem that it is difficult to easily manufacture a photoelectric conversion element in which, for example, the lead wire or the like can be connected to the counter electrode using the titanium substrate. In addition, there is room to further improve the bonding strength between the film and the titanium substrate.

The present invention has been made considering the above-mentioned circumstances and an object of the present invention is to provide a photoelectric conversion element manufacturing method of easily manufacturing a photoelectric conversion element including a terminal that is strongly bonded to an electrode made of titanium, a photoelectric conversion element manufactured by the method, a method of manufacturing a photoelectric conversion element module, and a photoelectric conversion element module manufactured by the method.

### Means for solving the Problem

A method of manufacturing a photoelectric conversion element according to the present the invention is **characterized in that** the method comprises: a semiconductor forming step of forming a porous oxide semiconductor layer on a surface of a catalytic layer of a first electrode including a metal plate made of titanium or an alloy including titanium and the catalytic layer, or a surface of a transparent conductor of a second electrode including the transparent conductor; a dye supporting step of supporting a photo-sensitized dye on the porous oxide semiconductor layer; a sealing step of surrounding and sealing the porous oxide semiconductor layer and an electrolyte between the first electrode and the second electrode with a sealing material; and a terminal forming step of forming a terminal on the metal plate in a surface other than the surface surrounded by the outer circumference of the sealing material in the first electrode, wherein, in the terminal forming step, the terminal is formed by applying an ultrasonic wave to a high-melting-point solder while the high-melting point solder is heated to melt.

According to the method of manufacturing the photoelectric conversion element, the porous oxide semiconductor layer is formed on the catalytic layer of the first electrode or the transparent conductor of the second electrode, and the photo-sensitized dye is supported on the porous oxide semiconductor layer. That is, in the first electrode and the second electrode, the electrode in which the porous oxide semiconductor layer is formed becomes an electrode in a working electrode and the electrode in which the porous oxide semiconductor layer is formed becomes an electrode in a counter electrode. The electrolyte is surrounded and sealed between the first electrode and the second electrode by the sealing material. The first electrode includes the metal plate made of titanium or an alloy including titanium, and the metal plate has corrosion resistance to the electrolyte. The terminal is formed on the metal plate in a surface other than the surface surrounded by the outer circumference of the sealing material in the first electrode. Here, the terminal is made of a high-melting-point solder and is formed in a manner such that the high-melting-point solder is applied with an ultrasonic wave while it is heated to melt. Therefore, when the terminal is formed, the wettability of the high-melting-point solder with respect to the surface of the metal plate is improved. As a result, it is possible to strongly bond the high-melting-point solder to the electrode made of titanium. In addition, it is possible to easily form the terminal without using equipment, such as a vacuum apparatus or the like.

In the above-mentioned method of manufacturing a photoelectric conversion element, the porous oxide semiconductor layer may be formed on the transparent conductor.

Further, in the above-mentioned method of manufacturing a photoelectric conversion element, it is preferable that the first electrode include an extending portion that extends to the outside of the region surrounded by the outer circumference of the sealing material, when viewing the first electrode from a direction vertical to the surface of the first electrode, and the terminal be formed in the extending portion.

According to the method of manufacturing the photoelectric conversion element, the distance between the terminal and the photo-sensitized dye or the electrolyte is longer than that when the terminal is formed in the region surrounded by the sealing material on the surface of the first electrode opposite to the second electrode, when viewing the first electrode from the direction vertical to the surface of the first electrode. Therefore, in the terminal forming step, it is possible to prevent heat from being transferred to the photo-sensitized dye or the electrolyte through the first electrode. As a result, it is possible to prevent the deterioration of the photo-sensitized dye or the electrolyte due to heat in the terminal forming step.

Moreover, in the above-mentioned method of manufacturing a photoelectric conversion element, it is preferable that the terminal be formed so as to extend from one surface of the first electrode opposite to the second electrode to the other surface thereof facing the second electrode.

According to the method of manufacturing the photoelectric conversion element, the terminal is formed so as to extend from one surface of the first electrode opposite to the second electrode to the other surface thereof facing the second electrode and is bonded to the metal plate of the first electrode. Therefore, it is possible to strongly connect the terminal to the metal plate.

Alternatively, in the above-mentioned method of manufacturing a photoelectric conversion element, it is preferable that a power collection line made of a metal material be provided on the surface of the second electrode facing the first electrode so as to extend from the region surrounded by the sealing material to the outside of the outer circumference of the sealing material, and the terminal be formed in the region surrounded by the sealing material on the surface of the first electrode opposite to the second electrode at a position overlapping the power collection line, when viewing the first electrode from the direction vertical to the surface of the first electrode.

According to the method of manufacturing the photoelectric conversion element having the above-mentioned structure, in terminal forming step, heat transferred to the electrolyte through the first electrode is transferred to the power collection line. The power collection line has excellent thermal conductivity since it is made of a metal material. Since the power collection line is provided so as to extend from the region surrounded by the sealing material to the outside of the outer circumference of the sealing material, heat transferred to the power collection line is transferred to the outside of the outer circumference of the sealing material and is then emitted to the outside. Therefore, it is possible to prevent heat transferred to the photo-sensitized dye or the electrolyte through the first electrode from remaining in the photo-sensitized dye or the electrolyte. As a result, it is possible to prevent the deterioration of the photo-sensitized dye or the electrolyte due to heat in the terminal forming step.

Alternatively, in the method of manufacturing a photoelectric conversion element, it is preferable that a power collection line made of a metal material be provided on the surface of the second electrode facing the first electrode so as to extend from a region overlapping the sealing material to the outside of the outer circumference of the sealing material, and the terminal be formed in the region overlapping the sealing material on the surface of the first electrode opposite to the second electrode at a position overlapping the power collection line, when viewing the first electrode from the direction vertical to the surface of the first electrode.

According to the method of manufacturing the photoelectric conversion element having the above-mentioned structure, in terminal forming step, heat transferred to the sealing material through the first electrode is transferred to the power collection line. The power collection line has excellent thermal conductivity since it is made of a metal material. Since the power collection line is provided so as to extend from the region overlapping the sealing material to the outside of the outer circumference of the sealing material, heat transferred to the power collection line is transferred to the outside of the outer circumference of the sealing material and is then emitted to the outside. Therefore, it is possible to prevent heat transferred to the sealing material via the counter electrode from remaining in the sealing material or prevent heat transferred to the photo-sensitized dye or the electrolyte via the sealing member from remaining in the photo-sensitized dye or the electrolyte. As a result, it is possible to prevent the deterioration of the sealing member, the photo-sensitized dye, or the electrolyte due to heat in the terminal forming step.

Moreover, a method of manufacturing a photoelectric conversion element according to the present invention is **characterized in that** the method comprises: a terminal forming step of forming a terminal on a surface of a metal plate of a first electrode including the metal plate made of titanium or an alloy including titanium and a catalytic layer; a semiconductor forming step of forming a porous oxide semiconductor layer on a surface of a transparent conductor of a second electrode including the transparent conductor; a dye supporting step of supporting a photo-sensitized dye on the porous oxide semiconductor layer; and a sealing step of making the first electrode and the second electrode face and surrounding and sealing the porous oxide semiconductor layer and an electrolyte between the first electrode and the second electrode with a sealing material such that the terminal is not surrounded by the sealing material, wherein, in the terminal forming step, the terminal is formed by applying an ultrasonic wave to a high-melting-point solder while the high-melting-point solder is heated to melt.

According to the method of manufacturing the photoelectric conversion element, the terminal is formed on the metal plate on the first electrode, the porous oxide semiconductor layer is formed on the second electrode, and the photo-sensitized dye is supported on the porous oxide semiconductor layer. As such, the terminal forming step is performed before the sealing step, and the terminal and the porous oxide semiconductor layer are formed on each of different electrodes, respectively. Therefore, heat applied in the terminal forming step is not transferred to the second electrode. As a result, it is possible to prevent the deterioration of the photo-sensitized dye due to heat in the terminal forming step. In addition, heat applied in the terminal forming step is not transferred to the electrolyte through the first electrode. Therefore, it is possible to prevent the deterioration of the electrolyte due to heat in the terminal forming step.

Alternatively, a method of manufacturing a photoelectric conversion element according to the present invention is **characterized in that** it comprises: a semiconductor forming step of forming a porous oxide semiconductor layer on a surface of a catalytic layer of a first electrode including a metal plate made of titanium or an alloy including titanium and the catalytic layer; a dye supporting step of supporting a photo-sensitized dye on the porous oxide semiconductor layer; a terminal forming step of forming a terminal on the metal plate in a region in which the porous oxide semiconductor layer is not formed on the surface of the first electrode; and a sealing step of making a second electrode having a transparent conductor and the first electrode face and surrounding and sealing the porous oxide semiconductor layer and an electrolyte between the first electrode and the second electrode with a sealing material such that the terminal is not surrounded by the sealing material, wherein, in the terminal forming step, by applying an ultrasonic wave to a high-melting-point solder while the high-melting-point solder is heated to melt.

According to the method of manufacturing the photoelectric conversion element, the terminal forming step is performed before the sealing step. Therefore, heat applied in the terminal forming step is not transferred to the electrolyte through the first electrode. As a result, it is possible to prevent the deterioration of the electrolyte due to heat.

Further, in the above-mentioned method of manufacturing a photoelectric conversion element, it is preferable that the terminal forming step be performed before the dye supporting step.

According to the method of manufacturing the photoelectric conversion element, the terminal forming step is performed before the dye supporting step. Therefore, heat applied in the terminal forming step is not transferred to the photo-sensitized dye. As a result, it is possible to prevent the deterioration of the photo-sensitized dye due to heat.

A photoelectric conversion element according to the present invention is **characterized in that** the photoelectric conversion element is manufactured by the above-mentioned method of manufacturing a photoelectric conversion element.

According to the photoelectric conversion element, during a manufacturing process, the wettability of the high-melting-point solder with respect to the surface of the metal plate in the first electrode is improved, and it is possible to strongly bond the first electrode made of titanium and the terminal formed on the first electrode to each other. Therefore, it is possible to strongly bond the photoelectric conversion element and a lead wire or the like when the lead wire or the like is connected to the terminal.

A method of manufacturing a photoelectric conversion element module according to the present invention is **characterized in that** it comprises: a photoelectric conversion element preparing step of preparing a plurality of photoelectric conversion elements manufactured by the method of manufacturing a photoelectric conversion element according to any one of claims 1 to 9; and a connection step of electrically connecting the terminal formed on the first electrode of at least one of the photoelectric conversion elements and the second electrode of at least another photoelectric conversion element with a conductive member.

According to the method of manufacturing the photoelectric conversion element module, it is possible to easily and strongly bond the high-melting-point solder to the first electrode made of titanium in the photoelectric conversion elements forming the photoelectric conversion element module. Therefore, it is possible to manufacture a photoelectric conversion module capable of strongly connecting the photoelectric conversion elements through the conductive member.

Further, in the above-mentioned method of manufacturing a photoelectric conversion element module, in the photoelectric conversion element, the terminal may be formed outside a region surrounded by the outer circumference of the sealing material on the surface of the second electrode facing the first electrode, and the terminal formed on the first electrode of at least one of the photoelectric conversion elements and the terminal formed on the second electrode of at least another photoelectric conversion element may be connected to each other by the conductive member.

A photoelectric conversion element module according to the present invention is **characterized in that** it is manufactured by the above-mentioned method of manufacturing a photoelectric conversion element module.

According to the photoelectric conversion element module, it is possible to strongly connect the photoelectric conversion elements. Therefore, it is possible to prevent the disconnection between the photoelectric conversion elements due to, for example, external force or the like.

### Effects of the Invention

According to the present invention, provided are a photoelectric conversion element manufacturing method and the like that is capable of easily manufacturing a photoelectric conversion element including a terminal that is strongly bonded to an electrode made using titanium, a photoelectric conversion element manufactured by the method, a method of manufacturing a photoelectric conversion element module, and a photoelectric conversion element module manufactured by the method.

### BRIEF DESCRIPTION OF DRAWINGS

Fig. 1 is a cross-sectional view illustrating a photoelectric conversion element according to a first embodiment of the present invention.
Fig. 2 is a cross-sectional view illustrating a photoelectric conversion element according to a second embodiment of the present invention.
Fig. 3 is a cross-sectional view illustrating a photoelectric conversion element according to a third embodiment of the present invention.
Fig. 4 is a cross-sectional view illustrating a photoelectric conversion element according to a fourth embodiment of the present invention.
Fig. 5 is a cross-sectional view illustrating a photoelectric conversion element module according to a fifth embodiment of the present invention.
Fig. 6 is a cross-sectional view illustrating a photoelectric conversion element module according to a sixth embodiment of the present invention.
Fig. 7 is a cross-sectional view illustrating a photoelectric conversion element module according to a seventh embodiment of the present invention.
Fig. 8 is a cross-sectional view illustrating a modification of the photoelectric conversion element shown in Fig. 1.

### BEST MODE FOR CARRYING OUT THE INTENTION

Hereinafter, preferred embodiments of a method of manufacturing a photoelectric conversion element, a photoelectric conversion element manufactured by the method, a method of manufacturing a photoelectric conversion element module, and a photoelectric conversion element module manufactured by the method according to the present invention will be described in detail with reference to the accompanying drawings.

### (First embodiment)

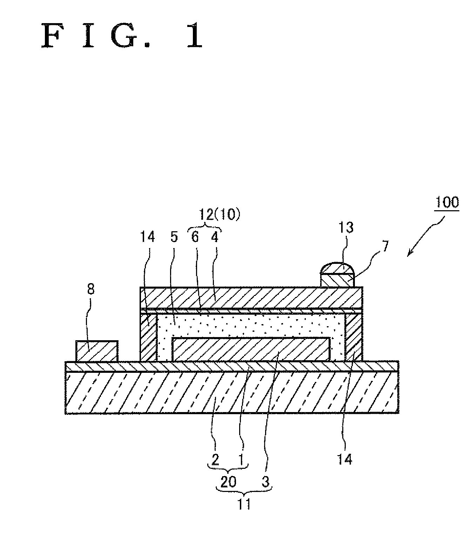

Fig. 1 is a schematic cross-sectional view illustrating a photoelectric conversion element according to a first embodiment of the invention.

As shown in Fig. 1, a photoelectric conversion element 100 includes as main structural elements a working electrode 11, a counter electrode 12 that is provided so as to face the working electrode 11, an electrolyte 5 that is disposed between the working electrode 11 and the counter electrode 12, a sealing material 14 that surrounds the electrolyte 5, and a terminal 7 that is formed on one surface of the counter electrode 12 opposite to the working electrode 11.

### (Working electrode)

The working electrode 11 includes a second electrode 20 having a transparent base 2 and a transparent conductor 1 provided on one surface of the transparent base 2, and a porous oxide semiconductor layer 3 that is provided on the transparent conductor 1 and has a photo-sensitized dye supported thereon.

The transparent base 2 is formed of a substrate made of a translucent material. Examples of the translucent material include glass, polyethylene terephthalate (PET), polycarbonate (PC), polyether sulfone (PES), and polyethylene naphthalate (PEN). The translucent material may be any material generally used as the transparent base of the photoelectric conversion element. The material forming the transparent base 2 is appropriately selected from the materials considering resistance to electrolyte or the like. It is preferable that the transmittance of the transparent base 2 be as excellent as possible. It is more preferable that the light transmittance of the transparent base be equal to or more than 90%.

The transparent conductor 1 is a transparent conductive thin film that is partially or wholly formed on one surface of the transparent base 2. In order to prevent the transparency of the working electrode 11 from being significantly damaged, it is preferable that the transparent conductor 1 be a thin film made of a conductive metal oxide. Examples of the conductive metal oxide include an indium tin oxide (ITO), a fluorine-added tin oxide (FTO), and a tin oxide (SnO₂). The transparent conductor 1 may be a single layer or a laminate of a plurality of layers made of different conductive metal oxides. When the transparent conductor 1 is a single layer, it is preferable that the transparent conductor 1 be made of ITO or FTO in terms of ease of the formation of a film and a low manufacturing cost. It is more preferable that the transparent conductor 1 be made of FTO in terms of high heat resistance and high chemical resistance.

It is preferable that the transparent conductor 1 be a laminate of a plurality of layers since it is possible to reflect the characteristics of each layer. It is preferable that the transparent conductor 1 be a laminated film obtained by laminating an FTO film on an ITO film. In this case, it is possible to achieve the transparent conductor 1 with high conductivity, high heat resistance, and high chemical resistance, and it is possible to form a transparent conductive substrate that absorbs a small amount of light in the visible range and has high conductivity. In addition, the thickness of the transparent conductor 1 may be in the range of, for example, 0.01 µm to 2 µm.

An oxide semiconductor forming the porous oxide semiconductor layer 3 is not particularly limited. Any material generally used to form the porous oxide semiconductor layer for a photoelectric conversion element may be used as the oxide semiconductor. Examples of the oxide semiconductor include a titanium oxide (TiO₂), a tin oxide (SnO₂), a tungsten oxide (WO₃), a zinc oxide (ZnO), a niobium oxide (Nb₂O₅), strontium titanate (SrTiO₃), an indium oxide (In₃O₃), a zirconium oxide (ZrO₂), a thallium oxide (Ta₂O₅), a lanthanum oxide (La₂O₃), an yttrium oxide (Y₂O₃), a holmium oxide (Ho₂O₃), a bismuth oxide (Bi₂O₃), a cerium oxide (CeO₂), and an aluminum oxide (Al₂O₃) The porous oxide semiconductor layer 3 may be made of an oxide semiconductor including two or more kinds of elements selected from them.

It is preferable that the average diameter of particles of the oxide semiconductor be in the range of 1 nm to 1000 nm since the surface area of the oxide semiconductor covered with dye increases, that is, photoelectric conversion is performed in the wide area, and, therefore, it is possible to generate a large number of electrons. It is preferable that the porous oxide semiconductor layer 3 be formed by laminating oxide semiconductor particles with different particle size distributions. In this case, it is possible to repeatedly reflect light in the semiconductor layer and reduce the amount of incident light emitted to the outside of the porous oxide semiconductor layer 3. Therefore, it is possible to effectively convert light into electrons. The thickness of the porous oxide semiconductor layer 3 may be in the range of, for example, 0.5 µm to 50 µm. The porous oxide semiconductor layer 3 may be a laminate of a plurality of oxide semiconductors made of different materials.

As a method of forming the porous oxide semiconductor layer 3, there may be used a method including adding a desired additive to dispersion liquid that is obtained by dispersing, for example, commercial oxide semiconductor particles in a desired dispersion medium, or a colloid solution that can be prepared by a sol-gel method, according to need; applying a mixture by well-known coating such as screen printing, ink jet printing, roll coating, a doctor blade method, spray coating or the like; and making the mixture be porous by forming voids by heat processing or the like.

Examples of the photo-sensitized dye include ruthenium complexes including a bipyridine structure or a terpyridine structure or the like in a ligand, complexes including metal, such as porphyrin,phthalocyanine or the like, and organic dyes, such as eosin, rhodamine, and merocyanine. It is possible to select a material showing suitable behaviors for the purpose or the semiconductor used from the above-mentioned materials without particular limitation. Specifically, N3, N719, black dye or the like may be used.

### (Electrolyte)

The electrolyte 5 may be formed by impregnating an electrolytic solution into the porous oxide semiconductor layer 3 or by impregnating an electrolytic solution into the porous oxide semiconductor layer 3, gelating the electrolytic solution using an appropriate gelation agent (pseudo-solidifying), and integrated the electrolytic solution with the porous oxide semiconductor layer 3. Alternatively, a gel electrolyte including an ionic liquid, oxide semiconductor particles, or conductive particles may be used.

As the above-mentioned electrolytic solution, the solution obtained by dissolving an electrolyte component, such as iodine, iodide ions, tertiary-butyl pyridine or the like in an organic solvent, such as ethylene carbonate or acetonitrile may be used. As the gelation agent used to gelate the electrolytic solution, polyvinylidene fluoride, polyethylene oxide derivative, amino acid derivative or the like may be used.

The above-mentioned ionic liquid is not particularly limited. Ambient temperature molten salt which is a liquid at a room temperature and is obtained by cationizing or anionizing a compound including quaternized nitrogen atoms is given as an example of the ionic liquid. Examples of the cation of the ambient temperature molten salt include a quaternized imidazolium derivative, a quaternized pyridinium derivative, a quaternized ammonium derivative and the like. Examples of the anion of the ambient temperature molten salt include BF₄⁻ , PF₆⁻, F(HF)ₙ⁻, bis(trifluoro-methylsulfonyl)imide [N(CF₃SO₂)₂⁻], an iodide ion and the like. Salt including a quaternized imidazolium-based cation, an iodide ion, or a bis(trifluoro-methylsulfonyl)imide ion may be given as an example of the ionic liquid.

Although the kind of material or the size of the oxide semiconductor particle is not particularly limited, a material that is easily mixed with an electrolytic solution including an ionic liquid as a main component and gelates the electrolytic solution is used as the oxide semiconductor particles. In addition, the oxide semiconductor particle needs to have excellent chemical stability with respect to other coexisting components included in the electrolyte without reducing the conductivity of the electrolyte. In particular, it is preferable that the oxide semiconductor particle do not deteriorate due to an oxidation reaction even when the electrolyte includes redox pairs, such as iodine/iodide ion, bromine/bromide ion or the like.

It is preferable that the oxide semiconductor particle be made of one or a mixture of two or more kinds of materials selected from the group consisting of TiO₂, SinO₂, WO₃, ZnO, Nb₂O₅, In₂O₃, ZrO₂, Ta₂O₅, La₂O₃, SrTiO₃, Y₂O₃, Ho₂O₃, Bi₂O₃, CeO₂, and Al₂O₃. Titanium dioxide fine particles (nano particles) is more preferable. It is more preferable that the average diameter of the titanium dioxide fine particles be in the range of about 2 nm to 1000 nm.

Particles with conductivity, such as conductive particles or semiconductor particles, are used as the conductive particles. The specific resistance of the conductive particle is preferably equal to or less than 1.0×10⁻² Ω·cm and more preferably equal to or less than 1.0×10⁻³ Ω·cm. Although the kind or size of the conductive particle is not particularly limited, a material that is easily mixed with an electrolytic solution including an ionic liquid as a main component and gelates the electrolytic solution is used as the oxide semiconductor particles. In addition, the conductive particle needs to have excellent chemical stability with respect to other coexisting components included in the electrolyte without easily reducing its conductivity in the electrolyte. In particular, it is preferable that the conductive particle does not deteriorate due to an oxidation reaction even when the electrolyte includes redox pairs, such as iodine/iodide ion, bromine/bromide ion or the like.

For example, the conductive particles are made of a material having carbon as a main component. Specifically, examples of the conductive particle include a particle, such as a carbon nanotube, a carbon fiber, a carbon black and the like. A method of manufacturing these materials is known, and materials on the market may also be used.

### (Counter electrode)

The counter electrode 12 includes a first electrode 10. The first electrode includes a metal plate 4 made of titanium or an alloy including titanium and a catalytic layer 6. The catalytic layer 6 accelerating a reduction reaction is formed on one surface of the metal plate 4 facing the working electrode 11. The catalytic layer 6 is made of platinum, carbon or the like.

### (Sealing material)

The sealing material 14 connects the working electrode 11 and the counter electrode 12, and the electrolyte 5 between the working electrode 11 and the counter electrode 12 is surrounded and sealed by the sealing material 14. The sealing material 14 is made of, for example, an ionomer, an ethylene-vinyl acetate anhydride copolymer, an ethylene-methacrylate copolymer, an ethylene-vinyl alcohol copolymer, an ultraviolet-cured resin, or a vinyl alcohol polymer. In addition, the sealing material 14 may be made of only a resin, or a resin and an inorganic filler.

### (Terminal)

The terminal 7 is formed on the surface of the counter electrode 12 opposite to the working electrode 11, that is, the surface of the metal plate 4 of the first electrode 10. The terminal 7 is made of a high-melting-point solder.

It is preferred that solder with a melting point of 200°C or more (for example, 210°C or more) be used as the high-melting-point solder. Examples of the high-melting-point solder include Sn-Cu-based high-melting-point solder, Sn-Ag-based high-melting-point solder, Sn-Ag-Cu-based high-melting-point solder, Sn-Au-based high-melting-point solder, Sn-Sb-based high-melting-point solder, and Sn-Pb-based high-melting-point solder (the content of Pb is more than, for example, 85 wt%), and one of these may be used singly or two or more may be used in combination.

In this embodiment, solder 13 for connecting, for example, a conductive wire and the terminal 7 is formed on the terminal 7. The solder 13 is not particularly limited. However, when the terminal 7 is high-melting point solder, the solder (hereinafter, the solder may be referred to as low-melting-point solder) having a melting point lower than that of the high-melting point solder is preferred. It is preferred that solder having a melting point of, for example, lower than 200°C be used as the low-melting-point solder. Examples of the low-melting-point solder include eutectic solder (for example, Sn-Pb or the like) and lead-free solder (for example, Sn-Ag, Sn-Cu, Sn-Ag-Cu, Sn-Zn, Sn-Zn-B or the like).

When the solder with a low melting point is used, it is possible to prevent an increase in the temperature of the photo-sensitized dye supported on the porous oxide semiconductor layer 3 or the electrolyte 5 during soldering between a conductive wire and the terminal 7 and thus prevent the deterioration of the photo-sensitized dye or the electrolyte 5.

A terminal 8 is formed in a region outside the outer circumference of the sealing material 14 on the surface of the second electrode 20 facing the first electrode. The examples of the material forming the terminal 8 include a metal, such as gold, silver, copper, platinum, aluminum or the like.

Next, a method of manufacturing the photoelectric conversion element 100 shown in Fig. 1 will be described.

First, the working electrode 11 and the counter electrode 12 are prepared (preparing step).

The working electrode 11 may be obtained by the following process. First, the transparent conductor 1 is formed on one surface of the transparent base 2, thereby forming the second electrode 20. Then, the porous oxide semiconductor layer 3 is formed on the transparent conductor 1 of the second electrode 20 (semiconductor forming step). Then, the photo-sensitized dye is supported (dye supporting step).

Examples of the method of forming the transparent conductor 1 on the transparent base 2 include a thin film forming method, such as a sputtering method, a CVD (chemical vapor deposition) method, a spray pyrolysis deposition method (SPD method), or a vapor deposition method. Among them, the spray pyrolysis deposition method is preferable. When the transparent conductor 1 is formed by the spray pyrolysis deposition method, it is possible to easily control the Haze rate. In addition, the spray pyrolysis deposition method is preferable since it does not require a vacuum system and therefore, it is possible to simplify a manufacturing process and reduce costs.

A method of forming the porous oxide semiconductor layer 3 on the transparent conductor 1 mainly includes an applying process and a drying and burning process. The applying process includes applying, for example, the paste of TiO₂ colloid obtained by mixing TiO₂ powder, a surface active agent, and a thickening agent at a predetermined ratio onto the surface of the transparent conductor 1 which is processed to have hydrophilicity. At that time, as an applying method, for example, the following method is used: a method of moving a pressing unit (for example, a glass rod) on the transparent conductor 1 such that the applied colloid has a uniform thickness while pressing the colloid against the transparent conductor 1. The drying and burning process includes, for example, a method in which the applied colloid is left in an ambient atmosphere at a room temperature for about 30 minutes so as to be dried, and is then burned at a temperature of 450°C for about 60 minutes using an electric furnace.

In a method of supporting the photo-sensitized dye on the porous oxide semiconductor layer 3, first, a dye solution for supporting dye, for example, a solution obtained by adding a very small amount of N3 dye powder to a solvent including acetonitrile and t-butanol at a volume ratio of 1:1 is prepared.

Then, the second electrode 20 having the porous oxide semiconductor layer 3 formed thereon, which is subjected to a heat treatment at a temperature of about 120°C to 150°C in a separate electric furnace, is dipped in a solution including the photo-sensitized dye as a solvent in a schale-shaped container. Then, the second electrode 20 is maintained in a dark place for one day (about 20 hours). Then, the second electrode 20 having the porous oxide semiconductor layer 3 formed thereon is taken out from the solution including the photo-sensitized dye, and is cleaned with a mixed solution of acetonitrile and t-butanol. In this way, the working electrode 11 having the porous oxide semiconductor layer 3, which is a TiO₂ thin film having the photo-sensitized dye supported thereon, is obtained.

The terminal 8 on the working electrode 11 is formed by, for example, applying silver paste using a printing method and heating and burning it. It is preferable that the formation of the terminal 8 be performed before the dye supporting step.

In order to prepare the counter electrode 12, first, the metal plate 4 made of titanium or a titanium alloy is prepared. Then, the catalytic layer 6 made of, for example, platinum is formed on the surface of the prepared metal plate 4. The catalytic layer 6 is formed by, for example, a sputtering method. In this way, it is possible to obtain the first electrode 10 including the metal plate 4 and the catalytic layer 6. The first electrode 10 serves as the counter electrode 12.

Then, the electrolyte 5 is surrounded and sealed between the working electrode 11 and the counter electrode 12 by the sealing material 14 (sealing step).

First, a resin or a precursor thereof for forming the sealing material 14 is formed on the working electrode 11. In this case, the resin or the precursor thereof is formed so as to surround the porous oxide semiconductor layer 3 of the working electrode 11. When the resin is a thermoplastic resin, a molten resin is applied onto the working electrode 11 and is then naturally cooled at the room temperature, or a film-shaped resin contacts the working electrode 11, is heated and melted by an external heat source, and is naturally cooled at the room temperature, thereby obtaining the resin. For example, an ionomer or an ethylene-methacrylate copolymer is used as the thermoplastic resin. When the resin is an ultraviolet-curable resin, the ultraviolet-curable resin, which is the precursor of the resin, is applied onto the working electrode 11. When the resin is a water-soluble resin, an aqueous solution including the resin is applied onto the working electrode 11. For example, a vinyl alcohol polymer is used as the water-soluble resin.

Then, a resin or a precursor thereof for forming the sealing material 14 is formed on the counter electrode 12. The resin or the precursor thereof is formed on the counter electrode 12 at a position where it overlaps the resin or the precursor thereof formed on the working electrode 11 when the working electrode 11 faces the counter electrode 12. The resin or the precursor thereof may be formed on the counter electrode 12 by the same method as that forming the resin or the precursor thereof on the working electrode 11.

Then, an electrolyte is filled in the region surrounded by the resin or the precursor thereof on the working electrode 11.

Then, the working electrode 11 faces the counter electrode 12 to overlap the working electrode 11 with the resin on the counter electrode 12. Then, when the resin is a thermoplastic resin, the resin is heated and melted in a reduced-pressure environment to adhere the working electrode 11 and the counter electrode 12. In this way, the sealing material 14 is obtained. When the resin is an ultraviolet-curable resin, the working electrode 11 overlaps the ultraviolet-curable resin on the counter electrode 12 and the ultraviolet-curable resin is cured by ultraviolet rays, thereby forming the sealing material 14. When the resin is a water-soluble resin, a laminate is formed, is sufficiently dried at the room temperature so as not to stick to the finger, and is then dried in a low-humidity environment. In this way, the sealing material 14 is obtained.

Then, the terminal 7 is formed on the surface of the counter electrode 12 opposite to the working electrode 11, that is, on the metal plate 4 of the first electrode 10 (terminal forming step).

First, the counter electrode 12, the high-melting-point solder, and the leading end of a soldering iron are arranged are so as to come into contact with each other on the surface of the counter electrode 12 opposite to the working electrode 11.

In this case, the leading end of the solder iron is heated to melt the high-melting-point solder and generates an ultrasonic wave. Then, the high-melting-point solder is melted by heat transferred from the leading end of the solder iron and is vibrated by the ultrasonic wave generated from the leading end of the solder iron. Therefore, the wettability of the high-melting-point solder with the metal plate 4 is improved and the high-melting-point solder is fixed to the surface of the metal plate 4. In this way, the terminal 7 is formed on the surface of the counter electrode 12.

The temperature of the leading end of the solder iron is not particularly limited as long as the high-melting-point solder can be melted. However, it is preferable that the temperature of the leading end of the solder iron be in the range of, for example, 200°C to 450°C in order to sufficiently melt the solder. It is more preferable that the temperature of the leading end of the solder iron be in the range of 250°C to 350°C in order to prevent the oxidation of the solder and the deterioration of the photosensitized dye due to heat.

In addition, it is preferable that the vibration frequency of the ultrasonic wave generated from the leading end of the solder iron be in the range of 10 kHz to 200 kHz. It is more preferable that the vibration frequency of the ultrasonic wave be in the range of 20 kHz to 100 kHz in order to prevent the damage of the metal plate 4.

Then, the solder iron is separated from the molten high-melting-point solder and the high-melting-point solder is cooled, thereby forming the terminal 7.

The solder 13 on the terminal 7 and the terminal 8 is formed by melting solder on the terminals 7 and 8 and pseudo-solidifying the solder.

in this way, the photoelectric conversion element 100 shown in Fig. 1 is obtained.

According to the method of manufacturing the photoelectric conversion element 100, the porous oxide semiconductor layer 3 is formed on the transparent conductor 1 of the second electrode including the transparent base 2 and the transparent conductor 1 and a photo-sensitized dye is supported thereon and then the working electrode 11 is obtained. In addition, the catalytic layer 6 is formed on the surface of the metal plate 4 made of titanium or a titanium alloy to form the first electrode 10, and the first electrode serves as the counter electrode 12. In this way, the working electrode 11 and the counter electrode 12 are prepared, and the electrolyte 5 between the working electrode 11 and the counter electrode 12 is surrounded and sealed by the sealing material 14. Since the counter electrode 12 includes the metal plate 4 made of titanium or an alloy including titanium and the catalytic layer 6, the counter electrode 12 has corrosion resistance to the electrolyte 5. Then, the terminal 7 is formed on the surface of the metal plate 4 of the counter electrode 12. The terminal 7 is formed by applying an ultrasonic wave to a high-melting point solder while the high-melting-point solder is heated to melt. Therefore, when the terminal 7 is formed, the wettability of the high-melting-point solder with respect to the surface of the metal plate 4 is improved. As a result, it is possible to easily and strongly fix the terminal 7 made of the high-melting-point solder to the metal plate 4, which is a titanium plate or an alloy including titanium plate containing titanium therein.

In this way, it is possible to easily manufacture the photoelectric conversion element 100 including the terminal 7 that is strongly fixed to the surface of the metal plate 4 of the counter electrode 12.

Therefore, in the photoelectric conversion element 100 manufactured by the above-mentioned manufacturing process, the first electrode 10 made of titanium and the terminal 7 formed on the first electrode 10 are strongly bonded to each other. Therefore, when a lead wire is connected to the terminal 7, it is possible to strongly connect the photoelectric conversion element 100 and the lead wire.

### (Second embodiment)

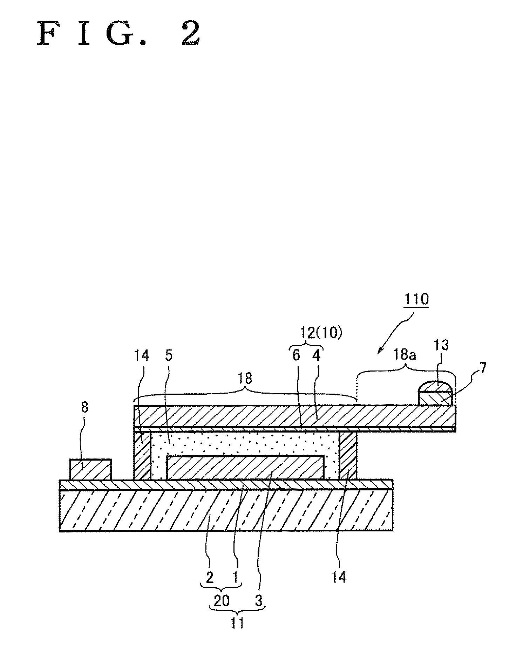

Next, second embodiment of a photoelectric conversion device according to the present invention will be described with reference to Fig. 2. In Fig. 2, the same components as those of the first embodiment or equivalents thereof are denoted by the same reference numerals and a description thereof will not be repeated.

Fig. 2 is a schematic cross-sectional view illustrating the photoelectric conversion device according to this embodiment. As shown in Fig. 2, in a photoelectric conversion element 110, the counter electrode 12 includes an extending portion 18a that extends from a region 18 surrounded by the outer circumference of the sealing material 14 to the outside, as viewing the metal plate 4 from a direction vertical to the surface of the metal plate 4 of the counter electrode 12. The terminal 7 is formed on the extending portion 18a. The photoelectric conversion element 110 is different from the photoelectric conversion element 100 according to the first embodiment in the above-mentioned points .

The photoelectric conversion element 110 is manufactured as follows.

First, in a preparing step, the counter electrode 12 having a region which is outside the region to be surrounded by the outer circumference of the sealing material 14 is prepared. That is, the counter electrode 12 having a region to be the extending portion 18a is prepared. The other processes in the preparing step are the same as those in the first embodiment.

In a sealing step, sealing is performed by the sealing material 14 such that the extending portion 18a is ensured. The sealing method may be the same as that in the sealing step according to the first embodiment.

Then, in a terminal forming step, the terminal 7 is formed on the extending portion 18a. Formation of the terminal may be performed by the same method as those in the terminal forming step according to the first embodiment.

According to the method of manufacturing the photoelectric conversion element 110, when heat is applied in the terminal forming step, the distance between the terminal 7 and the electrolyte 5 is longer than that when the terminal 7 is connected to the region surrounded by the sealing material 14 when viewing the counter electrode 12 from the direction vertical to the surface of the metal plate 4 of the counter electrode 12. Therefore, it is possible to prevent heat from being transferred to the photo-sensitized dye or the electrolyte 5 through the counter electrode 12. Therefore, even when heat is applied in the terminal forming step, it is possible to prevent the deterioration of the photo-sensitized dye or the electrolyte 5 due to heat.

### (Third embodiment)

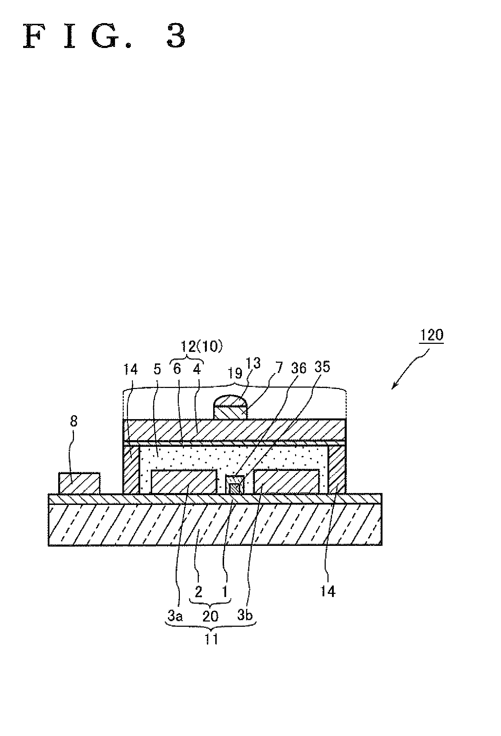

Next, a third embodiment of a photoelectric conversion device according to the present invention will be described with reference to Fig. 3. In Fig. 3, the same components as those of the first embodiment or equivalents thereof are denoted by the same reference numerals and a description thereof will not be repeated.

Fig. 3 is a schematic cross-sectional view illustrating the photoelectric conversion device according to this embodiment. As shown in Fig. 3, in a photoelectric conversion element 120, the working electrode 11 includes a plurality of porous oxide semiconductor layers 3a and 3b and a power collection line 35 made of a metal material is provided between the porous oxide semiconductor layers 3a and 3b on one surface of the working electrode 11 facing the counter electrode 12. The terminal is formed so as to overlap the power collection line 35 in a region 19 of the metal plate 4 surrounded by the sealing material 14, when viewing the counter electrode 12 from the direction vertical to the surface of the metal plate 4 of the counter electrode 12. The photoelectric conversion element 120 is different from the photoelectric conversion element 100 according to the first embodiment in the above-mentioned points.

The power collection line 35 is provided so as to extend from the region 19 surrounded by the sealing material 14 to the outside of the outer circumference of the sealing material and is connected to the terminal 8. In addition, the entire surface of the power collection line 35 is covered with a wiring line protective layer 36 such that the contact between the electrolyte 5 and the power collection line 35 is prevented. The wiring line protective layer 36 may or may not contact the transparent conductor 1 of the working electrode 11 as long as it covers the entire surface of the power collection line 35.

The power collection line 35 may be made of a material with a resistance less than that of the transparent conductor 1. For example, examples of the material include a metal, such as silver, copper, platinum, aluminum, titanium, nickel and the like.

The material constituting the wiring line protective layer 36 includes, for example, an inorganic insulating material such as a non-lead transparent glass frit with a low melting point.

It is preferable that the wiring line protective layer 36 be covered with a chemical-resistant resin (not shown), such as polyimide, a fluorine resin, an ionomer, an ethylene-vinyl acetate anhydride copolymer, an ethylene-methacrylate copolymer, an ethylene-vinyl alcohol copolymer, an ultraviolet-cured resin, or a vinyl alcohol polymer, in order to prevent the contact between the electrolyte 5 and the power collection line 35 for a longer time and prevent the generation of components dissolved from the wiring line protective layer 36 when the electrolyte 5 contacts the wiring line protective layer 36.

The photoelectric conversion element 120 is manufactured as follows.

First, when the working electrode 11 is prepared in a preparing step, the porous oxide semiconductor layers 3a and 3b are formed in a semiconductor forming step. In order to form the porous oxide semiconductor layers 3a and 3b, porous semiconductors may be provided at two points by the same method as that forming the porous oxide semiconductor layer 3 in the semiconductor forming step according to the first embodiment.

Then, the power collection line 35 and the wiring line protective layer 36 are formed. The power collection line 35 may be obtained by forming the porous oxide semiconductor layers 3a and 3b in the semiconductor forming step, applying metal particles for forming the power collection line between the porous oxide semiconductor layers 3a and 3b, and heating and burning the metal particles. It is preferable that the terminal 8 and the power collection line 35 be formed at the same time.

For example, the wiring line protective layer 36 may be formed by applying paste obtained by mixing an inorganic insulating material, such as the above-mentioned glass frit with a low melting point, with a thickening agent, a bonding agent, a dispersion agent, or a solvent, if necessary, so as to cover the entire surface of the power collection line 35 using a screen printing method or the like and heating and burning the paste.

When the wiring line protective layer 36 is covered with the above-mentioned chemical-resistant resin, the chemical-resistant resin may be obtained by applying a molten chemical-resistant resin onto the wiring line protective layer 36 and naturally cooling the molten chemical-resistant resin at the room temperature, or by contacting a film-shaped chemical-resistant resin with the wiring line protective layer 36, heating and melting the film-shaped chemical-resistant resin using an external heat source, and naturally cooling the film-shaped chemical-resistant resin at the room temperature. For example, an ionomer or an ethylene-methacrylate copolymer is used as the thermoplastic chemical-resistant resin. When the chemical-resistant resin is an ultraviolet-cured resin, the chemical-resistant resin may be obtained by applying the ultraviolet-curable resin, which is the precursor of the chemical-resistant resin, onto the wiring line protective layer 36 and curing the above-mentioned ultraviolet-curable resin with ultraviolet rays. When the chemical-resistant resin is a water-soluble resin, the chemical-resistant resin may be obtained by applying an aqueous solution including the chemical-resistant resin onto the wiring line protective layer 36.

The other processes in the preparing step are the same as those in the first embodiment.

Then, in a sealing step, sealing is performed by the same method as that in the sealing step according to the first embodiment.

Then, in a terminal forming step, the terminal 7 is formed. In the terminal forming step, the terminal 7 is formed at a position overlapping the power collection line 35 in the region 19 of the metal plate 4 surrounded by the sealing material 14, when viewing the metal plate 4 from the direction vertical to the surface of the metal plate 4. The formation of the terminal is performed by the same method as that in the terminal forming step according to the first embodiment.

According to the method of manufacturing the photoelectric conversion element 120, in the terminal forming step, heat transferred to the electrolyte 5 through the counter electrode 12 is transferred to the power collection line 35. Since the power collection line 35 is made of a metal material, it has excellent thermal conductivity. Since the power collection line 35 is provided so as to extend from the region 19 surrounded by the sealing material 14 to the outside of the outer circumference of the sealing material 14, heat transferred to the power collection line 35 is emitted to the outside of the outer circumference of the sealing material 14. Therefore, it is possible to prevent the heat transferred to the electrolyte 5 through the counter electrode 12 from remaining in the electrolyte 5. As a result, in the terminal forming step, even when heat is applied, it is possible to prevent the deterioration of the photo-sensitized dye or the electrolyte due to heat.

### (Fourth embodiment)

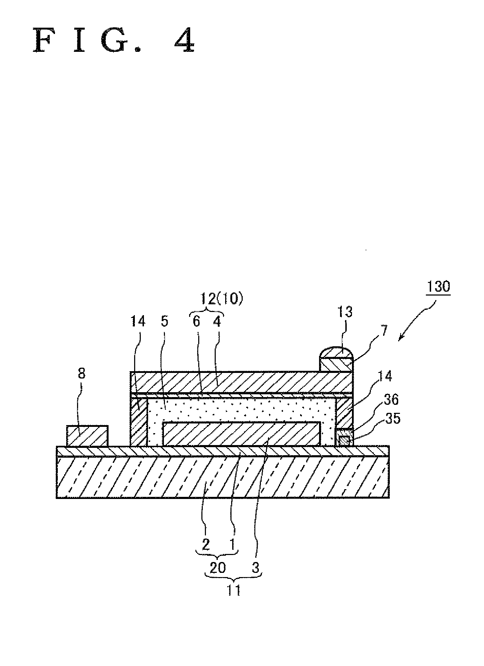

Next, a fourth embodiment of a photoelectric conversion device according to the present invention will be described with reference to Fig. 4. In Fig. 4, the same components as those of the first and third embodiments or equivalents thereof are denoted by the same reference numerals and a description thereof will not be repeated.

Fig. 4 is a schematic cross-sectional view illustrating the photoelectric conversion device according to this embodiment. As shown in Fig. 4, a photoelectric conversion element 130 is different from the photoelectric conversion elements according to the first and third embodiments in that the power collection line 35 is provided so as to extend from a position where it overlaps the sealing material 14 to the outside of the outer circumference of the sealing material 14 and is connected to the terminal 8, and the terminal 7 is formed at a position where the sealing material 14 and the power collection line 35 overlap each other, when viewing the metal plate 4 from the direction vertical to the surface of the metal plate 4.

The photoelectric conversion element 130 is manufactured as follows.

First, in a semiconductor forming step, the porous oxide semiconductor layer 3 is formed by the same method as that in the first embodiment, and the power collection line 35 is formed at a position overlapping the sealing material 14.

In order to form the power collection line 35 at a position overlapping the sealing material 14, first, the power collection line 35 is formed in a place in which the sealing material 14 will be formed around the porous oxide semiconductor layer 3. The method of forming the power collection line 35 is the same method as that forming the power collection line 35 in the third embodiment. Then, the wiring line protective layer 36 is formed. The wiring line protective layer 36 may be formed by the same method as that forming the wiring line protective layer in the third embodiment. It is preferable that the terminal 8 and the power collection line 35 be formed at the same time.

Then, in a sealing step, the working electrode 11 and the counter electrode 12 are overlapped and sealed such that the sealing material 14 and the power collection line 35 overlap each other. The sealing method may be performed by the same as that in the sealing step according to the first embodiment.

Then, in a terminal forming step, the terminal 7 is formed at a position where the sealing material 14 and the power collection line 35 overlap each other, when viewing the counter electrode 12 from the direction vertical to the surface of the metal plate 4. The terminal may be formed by the same method as that in the first embodiment.

According to the method of manufacturing the photoelectric conversion element, in the terminal forming step, heat transferred to the sealing material 14 through the counter electrode 12 is transferred to the power collection line 35. Since the power collection line 35 is provided so as to extend from the position where it overlaps the sealing material 14 to the outside of the outer circumference of the sealing material 14, heat transferred to the power collection line 35 is emitted to the outside of the outer circumference of the sealing material 14. Therefore, it is possible to prevent the heat transferred to the sealing material 14 through the counter electrode 12 from remaining in the sealing material 14 or prevent the heat transferred to the electrolyte 5 through the sealing material 14 from remaining in the electrolyte 5. As a result, in the terminal forming step, it is possible to prevent the deterioration of the sealing material 14, the photo-sensitized dye, or the electrolyte due to heat.

### (Fifth embodiment)

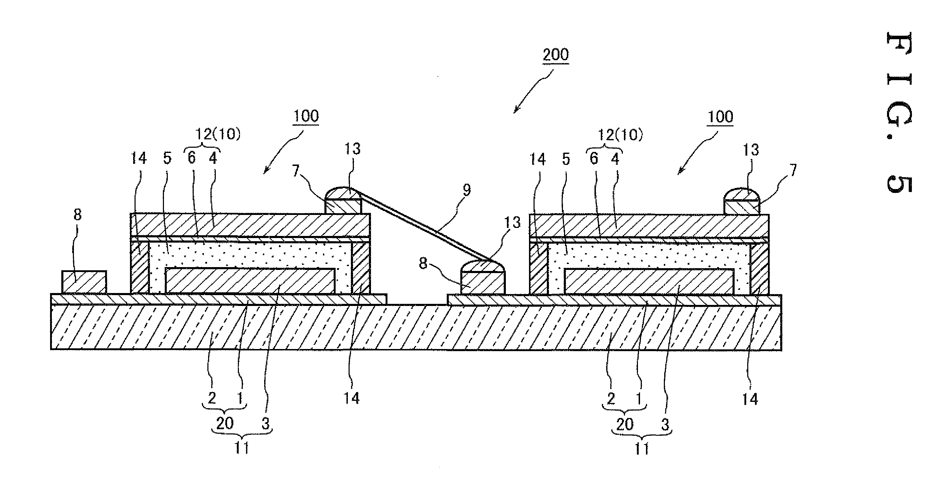

Next, a fifth embodiment of the present invention will be described with reference to Fig. 5. In Fig. 5, the same components as those of the first embodiment or equivalents thereof are denoted by the same reference numerals and a description thereof will not be repeated. This embodiment is a photoelectric conversion element module using a photoelectric conversion element having the same structure as the photoelectric conversion element 100 according to the first embodiment.

Fig. 5 is a schematic cross-sectional view illustrating the photoelectric conversion element module according to this embodiment.

As shown in Fig. 5, a photoelectric conversion element module 200 includes a pair of the photoelectric conversion elements 100. The two photoelectric conversion elements 100 and 100 share one transparent base 2.

One end of the conductive wire 9 is connected to the terminal 7 of one of the photoelectric conversion elements 100 by the solder 13. The other end of the conductive wire 9 is connected to the terminal 8 of the other photoelectric conversion element 100 by the solder 13. In this way, a pair of the photoelectric conversion elements 100 and 100 is connected in series to each other.

The conductive wire 9 is a wire made of a conductive material, such as metal or the like made of copper, solder or the like. For example, a lead wire or a solder ribbon wire may be used as the conductive wire 9.

The photoelectric conversion element module 200 may be manufactured as follows.

First, a pair of the photoelectric conversion elements 100 and 100 is prepared (photoelectric conversion element preparing step).

In order to prepare a pair of photoelectric conversion elements, first, in the preparing step of the manufacture of the photoelectric conversion element 100, a pair of the transparent conductors 1 is formed on the transparent base 2. The transparent conductors 1 may be formed by the same method as that forming the transparent conductor 1 in the first embodiment. Then, by the same method as that in the first embodiment, the porous oxide semiconductor layers 3 are formed on the transparent conductors 1 and a photo-sensitized dye is supported on the oxide semiconductor layers 3. Then, a plurality of counter electrodes is prepared by the same method as that in the first embodiment.

The terminals 8 are formed on the working electrodes 11 in each of the photoelectric conversion elements 100 and 100 by the same method as that in the first embodiment.

Then, the electrolyte 5 is sealed between each working electrode 11 and each counter electrode 12 by the same method as that in the sealing step according to the first embodiment.

Then, the terminals 7 are formed on the counter electrodes 12 by the same method as that in the terminal forming step according to the first embodiment.

Then, the terminal 7 on the counter electrode 12 of one of the photoelectric conversion elements 100 and the terminal 8 on the working electrode of the other photoelectric conversion element 100 are connected to each other by the conductive wire 9 (connection step).

The connection is performed by connecting one end of the conductive wire 9 to the terminal 7 on the counter electrode 12 of one of the photoelectric conversion elements 100 with the solder 13 and connecting the other end of the conductive wire 9 to the terminal 8 on the working electrode 11 of the other photoelectric conversion element 100 with the solder 13.

According to the method of manufacturing the photoelectric conversion element module according to this embodiment, after the photoelectric conversion elements 100 and 100 are manufactured, the conductive wire 9 may connect the terminal 7 formed on the surface of the counter electrode 12 opposite to the working electrode 11 and the terminal 8 formed on the transparent conductor 1 from the same direction using the solder 13. Therefore, it is possible to easily manufacture the photoelectric conversion element module 200. In addition, it is possible to easily change the connection of the conductive wire 9 after the photoelectric conversion element module 200 is manufactured.

In the photoelectric conversion element 100, the terminal 7 is strongly fixed to the metal plate 4 of the counter electrode 12. Therefore, it is possible to strongly connect the conductive wire 9 to the counter electrode 12 through the terminal 7. In the photoelectric conversion element module 200, the photoelectric conversion elements 100 are strongly connected to each other and it is possible to prevent the photoelectric conversion elements 100 from being disconnected from each other due to external force or the like.

In addition, in the photoelectric conversion element module 200, since the conductive wire 9 is connected by solder, it is possible to reduce resistance, as compared to the case in which the working electrode 11 of one of the photoelectric conversion elements 100 and the counter electrode 12 of the other photoelectric conversion element 100 are electrically connected to each other by, for example, silver paste or the like. Therefore, despite a titanium plate is used as the counter electrode 12, it is possible to reduce resistance and make durability better.

### (Sixth embodiment)

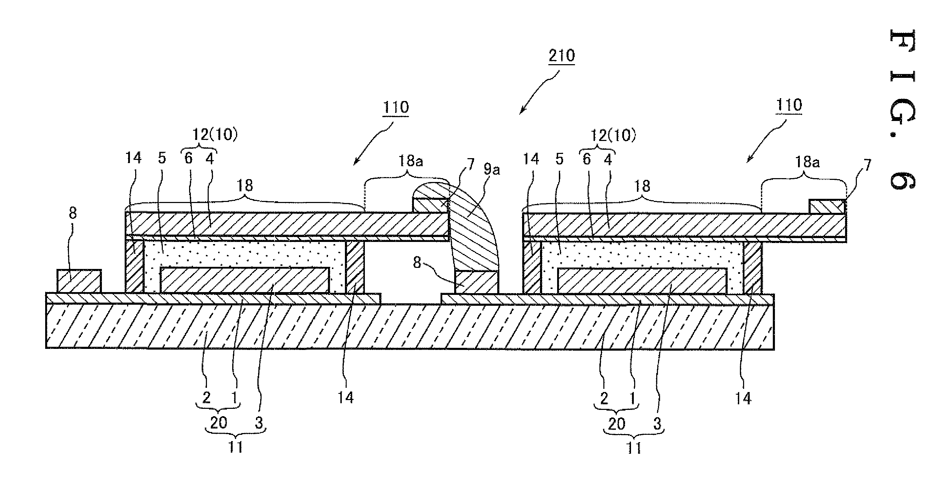

Next, a sixth embodiment of the present invention will be described with reference to Fig. 6. In Fig. 6, the same components as those of the second and fifth embodiments or equivalents thereof are denoted by the same reference numerals and a description thereof will not be repeated. This embodiment is a photoelectric conversion element module using a pair of photoelectric conversion elements having the same structure as the photoelectric conversion element 110 according to the second embodiment.

Fig. 6 is a schematic cross-sectional view illustrating the photoelectric conversion element module according to this embodiment.

As shown in Fig. 6, a photoelectric conversion element module 210 includes a pair of the photoelectric conversion elements 110 and 110. The two photoelectric conversion elements 110 and 110 share one transparent base 2.

A conductive adhesive 9a connects the terminal 7 on the counter electrode of one of the photoelectric conversion elements 110 and the terminal 8 on the working electrode of the other photoelectric conversion element 100. In this way, the two photoelectric conversion elements 110 are connected in series to each other.

Various kinds of metal paste, such as silver paste or the like, or carbon paste, may be used as the conductive adhesive 9a.

The photoelectric conversion element module 210 may be manufactured as follows.

First, a pair of the photoelectric conversion elements 110 and 110 is prepared (photoelectric conversion element preparing step).

In order to prepare a pair of the photoelectric conversion elements 110 and 110, in the preparing step of the manufacture of the photoelectric conversion element 110 according to the second embodiment, a pair of the transparent conductors 1 is formed on the transparent base 2. The transparent conductors 1 may be formed by the same method as that forming the transparent conductor 1 in the second embodiment. Then, by the same method as that in the second embodiment, the porous oxide semiconductor layers 3 are formed on the transparent conductors 1 and a photo-sensitized dye is supported on the oxide semiconductor layers 3. Then, a plurality of counter electrodes 12 is prepared by the same method as that in the second embodiment.

Then, the electrolyte 5 is sealed between each working electrode 11 and each counter electrode 12 by the same method as that in the sealing step according to the second embodiment.

Then, the terminal 7 is formed on the extending portion 18a of each counter electrode 12 by the same method as that in the terminal forming step according to the second embodiment. In addition, the terminal 8 is formed on the working electrode 11 of each of the photoelectric conversion elements 110 by the same method as that in the second embodiment.

Then, the terminal 7 on the counter electrode 12 of one of the photoelectric conversion elements 110 and the terminal 8 on the working electrode of the other photoelectric conversion element 110 are connected to each other by the conductive adhesive 9a (connection step).

According to the method of manufacturing the photoelectric conversion element module according to this embodiment, after the photoelectric conversion elements 110 and 110 are manufactured, it is possible to connect the terminal 7 formed on the surface of the counter electrode 12 opposite to the working electrode 11 and the terminal 8 formed on the transparent conductor 1 with the conductive adhesive 9a from the same direction. Therefore, it is possible to easily manufacture the photoelectric conversion element module 210. In addition, it is possible to easily change the connection between one of the photoelectric conversion elements 110 and the other photoelectric conversion element 110 after the photoelectric conversion element module is manufactured.

In the photoelectric conversion element 110, the terminal 7 is strongly fixed to the counter electrode 12. Therefore, it is possible to strongly connect the conductive adhesive 9a to the counter electrode 12 through the terminal 7.

### (Seventh embodiment)

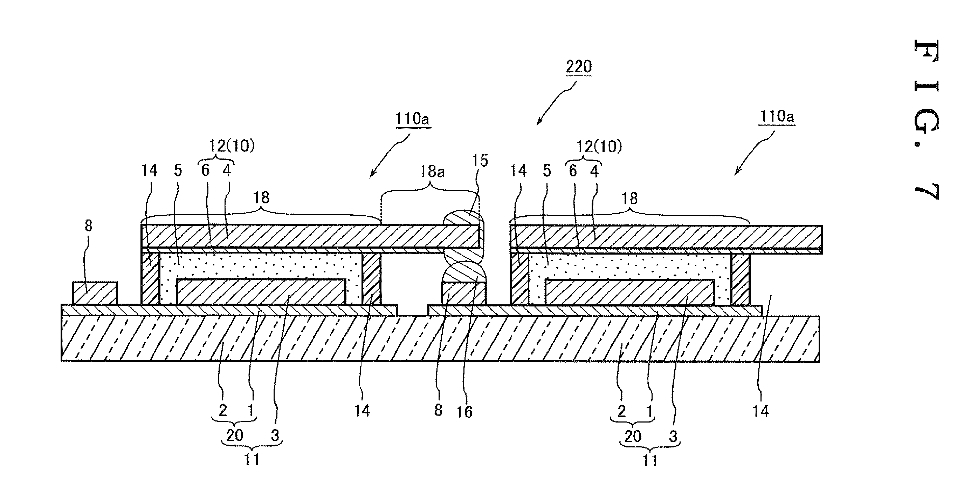

Next, a seventh embodiment of the present invention will be described with reference to Fig. 7. In Fig. 7, the same components as those of the second and sixth embodiments or equivalents thereof are denoted by the same reference numerals and a description thereof will not be repeated. This embodiment is a photoelectric conversion element module using a pair of photoelectric conversion elements.

Fig. 7 is a schematic cross-sectional view illustrating the photoelectric conversion element module according to this embodiment.

As shown in Fig. 7, a photoelectric conversion element module 220 includes a pair of photoelectric conversion elements 110a and 110a. The photoelectric conversion element 110a is different from the photoelectric conversion element 110 according to the second embodiment in that a terminal 15 is made of high-melting-point solder and the terminal 15 is formed so as to extend from one surface of the counter electrode 12 opposite to the working electrode 11 to the other surface thereof facing the working electrode 11. In the photoelectric conversion element module 220, the terminal 15 formed on the counter electrode 12 of one of the photoelectric conversion elements 110a and the terminal 8 formed on the working electrode 11 of the other photoelectric conversion element 110a overlap each other, when viewing the counter electrode 12 from a direction vertical to the surface of the counter electrode 12.

The terminal 15 of one of the photoelectric conversion elements 110a and the terminal 8 formed on the working electrode 11 of the other photoelectric conversion element 110a are connected to each other by solder 16. It is preferable that the solder 16 be low-melting-point solder.

The photoelectric conversion element may be manufactured as follows.

First, a pair of the photoelectric conversion elements 110a is prepared (photoelectric conversion element preparing step).

In order to prepare a pair of the photoelectric conversion elements 110a, first, the working electrode and the counter electrode are prepared by the same method as that in the preparing step according to the fifth embodiment.

Then, the terminal 15 made of high-melting-point solder is formed at the end of a region to be the extending portion 18a in the counter electrode 12 so as to extend from one surface of the counter electrode 12 to the other surface thereof. The terminal 15 may be formed by the same method as that forming the terminal 17 made of the high-melting-point solder in the second embodiment. In this case, the catalytic layer 6 is formed on the working electrode 11 side in the extending portion 18a of the counter electrode 12. However, when ultrasonic wave is applied to the high-melting-point solder, the catalytic layer 6 is destroyed. Therefore, the high-melting-point solder is directly formed on the metal plate 4 of the counter electrode 12, in the working electrode 11 side of the extending portion 18a. Then, the terminal 8 is formed on the transparent conductor 1 of the working electrode 11 outside a region to be surrounded by the outer circumference of the sealing material 14. The terminal 8 may be formed by the same method as that forming the terminal 8 in the second embodiment. Then, the solder 16, which is low-melting-point solder, is provided on the terminal 8.

Then, the counter electrode 12 of one of the photoelectric conversion elements and the working electrode 11 of the other photoelectric conversion element are overlapped such that the terminal 15 formed on the counter electrode 12 of one of the photoelectric conversion elements contacts the solder 16 of the terminal 8 formed on the working electrode 11 of the other photoelectric conversion element, and the electrolyte 5 is sealed between each working electrode 11 and each counter electrode 15 by the same method as that in the sealing step according to the second embodiment.

Then, the terminal 15 and the solder 16 are connected to each other by heating the solder 16 (connection step).

In the photoelectric conversion element module 220, it is possible to strongly bond the counter electrode 12 of one of the photoelectric conversion elements 110a to the other photoelectric conversion element 110a through the terminal 15 and the solder 16. The use of soldering makes it possible to improve electrical connectivity. Therefore, despite the metal plate 4 of the counter electrode 12 is made of titanium, it is possible to make electrical connectivity and durability good. In addition, since the terminal 15 and the solder 16 are made of solder, they are easily formed and are inexpensive. Therefore, it is possible to easily manufacture a photoelectric conversion element module and reduce costs. In the photoelectric conversion element module 220, the extending portion 18a disposed outside the region surrounded by the outer circumference of the sealing material 14 in one of the photoelectric conversion elements 110a is connected to the other photoelectric conversion element 110a. Therefore, during soldering, it is possible to prevent an increase in the temperature of the porous oxide semiconductor layer 3 or the electrolyte 5 and thus prevent the deterioration of the porous oxide semiconductor layer 3 or the electrolyte 5.

The first to seventh embodiments of the present invention have been described above, but the invention is not limited thereto.

For example, in the first to seventh embodiments, the terminal forming step is performed after the sealing step, but the invention is not limited thereto. For example, the terminal forming step may be performed before the sealing step.

In this case, before the sealing step is performed, the terminal 7 is formed on one surface of the counter electrode 12. The terminal may be formed by the same method as that in the terminal forming step according to the first embodiment.

The terminal 7 is not sealed by the sealing material. Therefore, sealing may be performed with the working electrode 11 and the counter electrode 12 facing each other such that the surface of the counter electrode 12 on which the terminal 7 is not formed faces the working electrode 11. The sealing method may be the same as that in the sealing step according to the first embodiment.

As such, according to the structure in which the terminal forming step is performed before the sealing step, even when heat is applied in the terminal forming step, it is possible to prevent the deterioration of the photo-sensitized dye or the electrolyte 5 due to heat transferred to the photo-sensitized dye or the electrolyte 5 in the terminal forming step since the porous oxide semiconductor layer 3 and the electrolyte 5 have not been sealed yet.

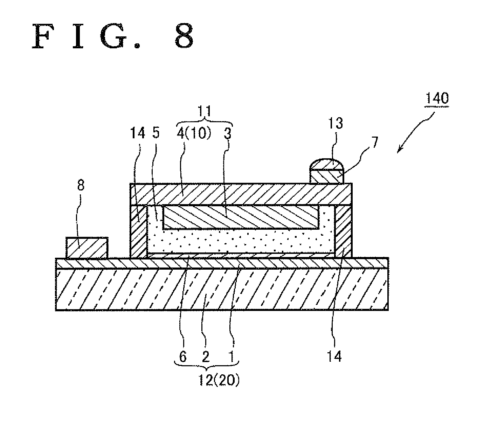

In the first to seventh embodiments, the porous oxide semiconductor layer 3 is formed on the second electrode 20. The working electrode 11 includes the second electrode 20 and the porous oxide semiconductor layer 3 having the photo-sensitized dye supported thereon, and the counter electrode 12 includes the first electrode 10. However, the present invention is not limited thereto. The porous oxide semiconductor layer 3 may be formed on the first electrode 10, the working electrode 11 may include the first electrode 10 and the porous oxide semiconductor layer 3 having the photo-sensitized dye supported thereon, and the counter electrode 12 may include the second electrode 20. Fig. 8 is a cross-sectional view illustrating a modification of the photoelectric conversion element 100 shown in Fig. 1. In this case, the first electrode 10 includes the metal plate 4, and the working electrode 11 includes the first electrode 10 and the porous oxide semiconductor layer 3 having the photo-sensitized dye supported thereon. The second electrode 20 includes the transparent base 2, the transparent conductor 1, and the catalytic layer 6 provided on the transparent conductor 1, and the counter electrode 12 includes the second electrode 20. The catalytic layer 6 is made of, for example, a platinum film or the like which is formed thinly to transmit light.

A photoelectric conversion element 140 is manufactured as follows. First, the first electrode 10 including the metal plate 4 is prepared. Then, the porous oxide semiconductor layer is formed on the first electrode 10. The method of forming the porous oxide semiconductor layer 3 may be performed by the same method as that in the semiconductor forming step according to the first embodiment. Then, the photo-sensitized dye is supported on the porous oxide semiconductor layer 3. Supporting the photo-sensitized dye may be performed by the same method as that in the dye supporting step according to the first embodiment. In this way, the working electrode 11 in which the porous oxide semiconductor layer 3 is formed on the first electrode 10 is obtained.

Then, the counter electrode 12 is prepared. In order to prepare the counter electrode 12, the transparent conductor 1 is formed on the transparent base 2 and the catalytic layer 6 is formed on the transparent conductor 1, thereby forming the second electrode. The transparent conductor 1 may be formed by the same method as that forming the transparent conductor 1 on the transparent base 2 in the first embodiment. The catalytic layer may be formed on the transparent conductor 1 by the same method as that forming the catalytic layer on the metal plate 4 in the first embodiment. The second electrode obtained in this way serves as the counter electrode 12.

Then, the porous oxide semiconductor layer 3 and the electrolyte 5 are sealed between the working electrode 11 and the counter electrode 12 by the sealing material 14. The sealing method may be the same as that in the sealing step according to the first embodiment. Then, the terminal 7 is formed. The terminal 7 may be formed by the same method as that in the terminal forming step according to the first embodiment. The other steps are the same as those in the first embodiment.

In this way, the photoelectric conversion element 140 is obtained.

In the manufacture of the photoelectric conversion element 140, the terminal 7 is formed after the sealing step. However, the terminal 7 may be formed before the sealing step. In this case, heat applied in the terminal forming step is not transferred to the electrolyte 5, and it is possible to prevent the deterioration of the electrolyte 5 due to heat in the terminal forming step.

Further, in the manufacture of the photoelectric conversion element 140, the formation of the terminal 7 may be performed before the dye supporting step. In this case, heat applied in the terminal forming step is not transferred to the photo-sensitized dye, and it is possible to prevent the deterioration of the photo-sensitized dye due to heat in the terminal forming step.

For example, in the fifth and seventh embodiments, the photoelectric conversion element module includes a pair of photoelectric conversion elements. However, the photoelectric conversion element module according to the present invention may include three or more photoelectric conversion elements. In the photoelectric conversion element module including three or more photoelectric conversion elements, when two of the three or more photoelectric conversion elements are connected to each other by the conductive wire, it is possible to easily change the photoelectric conversion elements connected by the conductive wire after the elements are assembled.

In the second embodiment, the terminal 7 is formed on the metal plate 4 of the counter electrode 12 which is in the opposite side of the working electrode 11. However, the terminal 7 may be formed on the metal plate 4 of the counter electrode 12 facing the working electrode 11. In order to form the terminal 7 on the metal plate 4 in the working electrode 11 side of the counter electrode 12, in the terminal forming step according to the second embodiment, the terminal 7 may be provided on the working electrode 11 side of the counter electrode 12. At that time, the catalytic layer 6 is formed in the working electrode 11 side of the counter electrode 12. However, in the terminal forming step, when an ultrasonic wave is applied to the high-melting-point solder, the catalytic layer 6 is destroyed. Therefore, it is possible to form the terminal 7 on the metal plate 4.

Alternatively, in the second embodiment, the terminal 7 may be formed so as to extend from the opposite side of the working electrode 11 side of the counter electrode 12 to the working electrode 11 side of the counter electrode 12. The method of forming the terminal 7 may be performed by the same method as that of forming the terminal 15 in the seventh embodiment.

The second electrode includes the transparent base 2 and the transparent conductor 1 provided on the transparent base 2. However, the second electrode may include a conductive glass as the transparent conductor.

### Examples

Hereinafter, the content of the present invention will be described specifically with reference to examples and comparative examples, but the present invention is not limited thereto.

### (Examples 1 to 6)

The following examination was conducted in order to check the bonding strength between a terminal and a metal plate when the terminal was made of a high-melting point solder.

A titanium foil with a thickness of 40 µm was prepared as the metal plate. A terminal was formed on a portion of the titanium foil by melting the a high-melting point solder shown in Table 1 with an ultrasonic solder iron and then solidify it. In this case, the temperature of the molten high-melting-point solder was set to be higher than the melting point shown in Table 1 and the vibration frequency of the ultrasonic wave was set to be 10 kHz.

A lead wire was soldered to the terminal using solder for bonding shown in Table 1. The lead wire was made of copper.

### (Comparative examples 1 and 2)

Comparative examples 1 and 2 were similar to Example 1 except that the terminals were made of low-melting-point solder shown in Table 1.

### (Comparative examples 3 to 8)

A terminal was formed on the metal plate using the high-melting-point solder shown in Table 1. Here, the bonding was performed by the same method as that in Example 1 except that an ultrasonic wave was not applied to the high-melting-point solder. Then, a lead wire was soldered using the solder for bonding shown in Table 1.

Then, a tensile force of 10 N was applied to the lead wire in the direction along the titanium foil in Examples 1 to 6 and Comparative examples 1 to 4, and it was measured whether the terminal peeled off from the titanium foil or not. As a result, the peeling-off of the terminal was represented by a symbol × and the non-peeling-off of the terminal was represented by a symbol ○.

The results are shown in Table 1. Cerasolzer is a product manufactured by Kuroda Techno Co., Ltd.

**[Table 1]**

| | Solder for terminal | Melting point (°C) | Solder for bonding | Melting point (°C) | Result |
|---|---|---|---|---|---|
| Example 1 | Cerasolzer#297 | 297 | Eutectic solder | 183 | ○ |
| Example 2 | Cerasolzer#297 | 297 | Cerasolzer#123 | 123 | ○ |
| Example 3 | Cerasolzer Eco #217 | 217 | Eutectic solder | 183 | ○ |
| Example 4 | Cerasolzer Eco #217 | 217 | Cerasolzer Eco #155 | 155 | ○ |
| Example 5 | Cerasolzer#297 | 297 | Cerasolzer Eco #217 | 217 | ○ |
| Example 6 | Cerasolzer#297 | 297 | Cerasolzer#297 | 297 | ○ |
| Comparative example 1 | Cerasolzer#123 | 123 | Cerasolzer#297 | 297 | × |
| Comparative example 2 | Cerasolzer Eco#155 | 155 | Cerasolzer Eco #217 | 217 | × |
| Comparative example 3 | Cerasolzer#297 | 297 | Eutectic solder | 183 | × |
| Comparative example 4 | Cerasolzer#297 | 297 | Cerasolzer#123 | 123 | × |
| Comparative example 5 | Cerasolzer Eco #217 | 217 | Eutectic solder | 183 | × |
| Comparative example 6 | Cerasolzer Eco #217 | 217 | Cerasolzer Eco #155 | 155 | × |
| Comparative example 7 | Cerasolzer#297 | 297 | Cerasolzer Eco #217 | 217 | × |
| Comparative example 8 | Cerasolzer#297 | 297 | Cerasolzer#297 | 297 | × |

### (Comparative example 9)

A copper film with a thickness of 1 µm was formed on the same metal plate as that in Example 1 by a sputtering method. A lead wire was soldered to the film by the same method as that in Example 1. Then, tensile force was applied to the lead wire by the same method as that in Example 1.

As shown in Table 1, it was found that in Examples 1 to 6 in which the terminal was made of the high-melting-point solder, even though a force of 10 N or more was applied in the direction along the titanium foil, the terminal did not peel off from the titanium foil and a sufficient bonding strength was obtained therebetween.

On the other hand, it was found that in all of Comparative examples 1 to 8, the adhesive force in the direction along the titanium foil was less than 10 N and a sufficient bonding strength was not obtained. In addition, in Comparative example 9, the film was peeled off from the titanium foil. Therefore, it was found that the adhesive force in the direction along the titanium foil was less than 10 N and therefore there is room for improving the bonding strength therebetween.

As described above, Examples 1 to 9 according to the present invention proved that it was possible to easily and fixedly form the terminal on the counter electrode, which was made of a titanium plate, without using a vacuum apparatus in order to form the terminal.

### (Example 7)

The photoelectric conversion element module shown in Fig. 7 was manufactured.

(Counter electrode) A conductive layer made of Pt was formed on a titanium foil with a thickness of 40 µm by a sputtering method and the laminate was used as the counter electrode. A terminal was formed on the extending portion of the counter electrode of the photoelectric conversion element. In the formation of the terminal, Cerasolzer#297 was used as the high-melting-point solder. When the terminal was formed, the high-melting-point solder was heated at a temperature more than the melting point thereof and an ultrasonic wave with a vibration frequency of 60 kHz was applied.

(Electrolyte) An electrolytic solution composed of an ionic liquid [Hexyl-methylimidazolium iodide] including iodine/iodide ion redox pairs was prepared.

(Working electrode) A transparent base, which was a glass substrate on which a transparent conductor made of FTO was formed, was used, and a slurry aqueous solution having titanium oxide with an average diameter of 20 nm dispersed therein was applied onto the transparent conductor of the transparent base, was dried, and was then heated at a temperature of 450°C for one hour, thereby forming a porous oxide semiconductor film with a thickness of 7 µm. In addition, the porous oxide semiconductor film was dipped in an ethanol solution of N3 dye made of a ruthenium bipyridine complex for one day such that the dye was supported on the porous oxide semiconductor film. In this way, the working electrode in which the porous oxide semiconductor layer was provided on the transparent base 2 was obtained.

Then, solder was provided on the extending portion of one of the photoelectric conversion elements and the terminal on the working electrode of the other photoelectric conversion element.

(Assembly of photoelectric conversion elements) A layer of an electrolyte was formed by combining the counter electrode in one photoelectric conversion element with the working electrode in the other photoelectric conversion element such that the terminal formed on the counter electrode in one photoelectric conversion element and the terminal on the working electrode in the other photoelectric conversion element overlap, and injecting and sealing the electrolyte between the counter electrode and the working electrode.

Then, the solder on the working electrode of the other photoelectric conversion element was heated to be connected to the terminal formed on the counter electrode of the one photoelectric conversion element.

### (Comparative example 10)

A photoelectric conversion element module was manufactured by the same method as that in Example 7 except that the terminal and the solder were not used and the extending portion of one photoelectric conversion element was connected to the terminal on the working electrode of the other photoelectric conversion element by silver paste, instead of the terminal and the solder.

The connection using the silver paste was performed by applying the silver paste to the extending portion of the one photoelectric conversion element and the terminal on the working electrode of the other photoelectric conversion element and leaving the silver paste for one hour at a temperature of 80°C.

Then, the photoelectric conversion efficiencies of Example 7 and Comparative example 10 were measured. The results are shown in Table 2.

As a reference example, the measurement result of the photoelectric conversion efficiency of only one photoelectric conversion element is also shown together.

**[Table 2]**

| | Photoelectric conversion efficiency (%) |
|---|---|
| Example 7 | 5.3 |
| Comparative example 10 | 3.5 |
| Reference example | 5.5 |

As shown in Table 2, the photoelectric conversion efficiency of Example 7 was higher than that of Comparative example 10. It is considered that this is because the electrical connectivity between the terminal on the counter electrode of one of the photoelectric conversion elements and the terminal on the working electrode on the other photoelectric conversion element is good in Example 7.

From the above, it was found that in Example 7, it was possible to easily manufacture the photoelectric conversion element module using the photoelectric conversion element having the terminal on the counter electrode and the photoelectric conversion efficiency of the photoelectric conversion element module was good.

### INDUSTRIAL APPLICABILITY

According to the present invention, provided are a photoelectric conversion element manufacturing method of easily manufacturing a photoelectric conversion element including a terminal strongly bonded to an electrode made of titanium, a photoelectric conversion element manufactured by the method, a method of manufacturing a photoelectric conversion element module, and a photoelectric conversion element module manufactured by the method.

### Description of Letters and Numerals

1: transparent conductor
2: transparent base
3, 3a, 3b: porous oxide semiconductor layer
5: electrolyte
7: terminal
8: terminal
9: conductive wire
9a: conductive adhesive
10: first electrode
11: working electrode
12: counter electrode
14: sealing material
20: second electrode
35: power collection line
100, 110, 120, 130, 140: photoelectric conversion element
200, 210, 220: photoelectric conversion element module

## Claims

1. A method of manufacturing a photoelectric conversion element comprising:
a semiconductor forming step of forming a porous oxide semiconductor layer on a surface of a catalytic layer of a first electrode including a metal plate made of titanium or an alloy including titanium and the catalytic layer, or a surface of a transparent conductor of a second electrode including the transparent conductor;
a dye supporting step of supporting a photo-sensitized dye on the porous oxide semiconductor layer;
a sealing step of surrounding and sealing the porous oxide semiconductor layer and an electrolyte between the first electrode and the second electrode with a sealing material; and
a terminal forming step of forming a terminal on the metal plate in a surface other than the surface surrounded by the outer circumference of the sealing material in the first electrode,
wherein, in the terminal forming step, the terminal is formed by applying an ultrasonic wave to a high-melting-point solder while the high-melting point solder is heated to melt.

2. The method of manufacturing a photoelectric conversion element according to claim 1,
wherein the porous oxide semiconductor layer is formed on the transparent conductor.

3. The method of manufacturing a photoelectric conversion element according to claim 1 or 2,
wherein the first electrode includes an extending portion that extends to the outside of the region surrounded by the outer circumference of the sealing material, when viewing the first electrode from a direction vertical to the surface of the first electrode, and
the terminal is formed in the extending portion.

4. The method of manufacturing a photoelectric conversion element according to claim 3,
wherein the terminal is formed so as to extend from one surface of the first electrode opposite to the second electrode to the other surface thereof facing the second electrode.

5. The method of manufacturing a photoelectric conversion element according to claim 1 or 2,
wherein a power collection line made of a metal material is provided on the surface of the second electrode facing the first electrode so as to extend from the region surrounded by the sealing material to the outside of the outer circumference of the sealing material, and
the terminal is formed in the region surrounded by the sealing material on the surface of the first electrode opposite to the second electrode at a position overlapping the power collection line, when viewing the first electrode from the direction vertical to the surface of the first electrode.

6. The method of manufacturing a photoelectric conversion element according to claim 1 or 2,
wherein a power collection line made of a metal material is provided on the surface of the second electrode facing the first electrode so as to extend from a region overlapping the sealing material to the outside of the outer circumference of the sealing material, and
the terminal is formed in the region overlapping the sealing material on the surface of the first electrode opposite to the second electrode at a position overlapping the power collection line, when viewing the first electrode from the direction vertical to the surface of the first electrode.

7. A method of manufacturing a photoelectric conversion element comprising:
a terminal forming step of forming a terminal on a surface of a metal plate of a first electrode including the metal plate made of titanium or an alloy including titanium and a catalytic layer;
a semiconductor forming step of forming a porous oxide semiconductor layer on a surface of a transparent conductor of a second electrode including the transparent conductor;
a dye supporting step of supporting a photo-sensitized dye on the porous oxide semiconductor layer; and
a sealing step of making the first electrode and the second electrode face and surrounding and sealing the porous oxide semiconductor layer and an electrolyte between the first electrode and the second electrode with a sealing material such that the terminal is not surrounded by the sealing material,
wherein, in the terminal forming step, the terminal is formed by applying an ultrasonic wave to a high-melting-point solder while the high-melting-point solder is heated to melt.

8. A method of manufacturing a photoelectric conversion element comprising:
a semiconductor forming step of forming a porous oxide semiconductor layer on a surface of a catalytic layer of a first electrode including a metal plate made of titanium or an alloy including titanium and the catalytic layer;
a dye supporting step of supporting a photo-sensitized dye on the porous oxide semiconductor layer;
a terminal forming step of forming a terminal on the metal plate in a region in which the porous oxide semiconductor layer is not formed on the surface of the first electrode; and
a sealing step of making a second electrode having a transparent conductor and the first electrode face and surrounding and sealing the porous oxide semiconductor layer and an electrolyte between the first electrode and the second electrode with a sealing material such that the terminal is not surrounded by the sealing material,
wherein, in the terminal forming step, by applying an ultrasonic wave to a high-melting-point solder while the high-melting-point solder is heated to melt.

9. The method of manufacturing a photoelectric conversion element according to claim 8,
wherein the terminal forming step is performed before the dye supporting step.

10. A photoelectric conversion element manufactured by the method of manufacturing a photoelectric conversion element according to any one of claims 1 to 9.

11. A method of manufacturing a photoelectric conversion element module comprising:
a photoelectric conversion element preparing step of preparing a plurality of photoelectric conversion elements manufactured by the method of manufacturing a photoelectric conversion element according to any one of claims 1 to 9; and
a connection step of electrically connecting the terminal formed on the first electrode of at least one of the photoelectric conversion elements and the second electrode of at least another photoelectric conversion element with a conductive member.

12. The method of manufacturing a photoelectric conversion element module according to claim 11,
wherein, in the photoelectric conversion element, the terminal is formed outside a region surrounded by the outer circumference of the sealing material on the surface of the second electrode facing the first electrode, and
the terminal formed on the first electrode of at least one of the photoelectric conversion elements and the terminal formed on the second electrode of at least another photoelectric conversion element are connected to each other by the conductive member.

13. A photoelectric conversion element module manufactured by the method of manufacturing a photoelectric conversion element module according to claim 11 or 12.
